# FASCICULE DE BREVET EUROPEEN

(11) **EP 0 564 385 B1**
(45) Date de publication et mention de la délivrance du brevet: **29.12.1997**
(21) Numéro de dépôt: 93460006.5
(22) Date de dépôt: 11.02.1993
(51) Int. Cl.: H04J 3/06, H04J 3/14

(54) **Procédé de correction de glissements non contrôlés de séquences de données portées par des liaisons numériques et dispositif pour la mise en oeuvre de ce procédé**
Anordnung und Verfahren für Ausregeln des unkontrollierten Schlupfs von über digitale Verbindungen übergetragenen Datenfolgen
Method and circuit for correction of uncontrolled slip of data sequences transmitted on digital links

(30) Priorité: 01.04.1992 FR 9204206
(43) Date de publication de la demande: 06.10.1993
(73) Titulaire: FRANCE TELECOM, 75015 Paris (FR)
(72) Inventeur: Sempe, Christian, F-31700 Blagnac (FR)
(74) Mandataire: Le Guen, Louis François

(56) Documents cités:
- EP-A- 0 091 061
- EP-A- 0 212 327
- EP-A- 0 301 481

## Description

La présente invention concerne un procédé de correction de glissements non contrôlés de séquences de données portées par des liaisons numériques. Elle concerne également un dispositif prévu pour la mise en oeuvre de ce procédé.

Les liaisons numériques concernées par la présente invention sont, par exemple, des liaisons satellite, des liaisons par câble, des liaisons par fibres optiques ou des liaisons par faisceaux hertziens. Elles ont communément des débits compris entre 2 et 140 Mbits/s et les informations qu'elles véhiculent sont multiplexées dans le temps. Elles sont classiquement appelées liaisons MIC.

Les séquences de données qui sont transmises sur ces liaisons numériques se présentent sous la forme de trames, elles-mêmes constituées de plusieurs mots présents dans des intervalles de temps consécutifs.

Ces liaisons numériques sont destinées à assurer la transmission de données entre deux noeuds contigus d'un réseau. Les équipements numériques qui équipent les noeuds doivent, pour fonctionner correctement, être synchronisés tant au niveau des bits mais aussi des trames et on a prévu pour cela la distribution d'un signal d'horloge à chacun de ces équipements.

Néanmoins, des différences momentanées de fréquences d'horloge peuvent se produire entre un équipement émetteur et un équipement récepteur. Aussi prévoit-on, pour chaque équipement, des registres tampon destinés à absorber ces différences de fréquences. Cependant, lorsque ces différences persistent sur une relativement longue période de temps, une ré-initialisation et, par conséquent, le vidage des registres des équipements sont nécessaires. Toutefois, ces opérations entraînent, à ce moment, une insertion ou une suppression de un ou plusieurs bits dans la séquence de données transmises. Ces insertion ou suppression sont appelées de manière générique des glissements.

Selon la manière dont ces glissements sont engendrés au niveau d'un équipement, on considère généralement deux types de glissements qui ont chacun leurs effets propres sur le réseau: les glissements contrôlés et les glissements non-contrôlés.

Les premiers sont engendrés par des équipements dont le vidage et le remplissage des registres tampon, par exemple de capacité égale à une trame, se font trame par trame. Ces opérations se traduisent par une perte ou une insertion de bits mais sont sans effet sur la synchronisation trame des séquences de données. Ces équipements, par exemple des commutateurs numériques, réémettent les données, avant de les envoyer sur le réseau, sous forme de trames.

Les seconds sont engendrés par des équipements qui stockent dans leurs registres tampon la totalité des données transmises et les envoient sur le réseau comme elles sont stockées. En particulier, de tels équipements ne reconnaissent pas les trames dans ces données. Le vidage ou le remplissage de leurs registres se traduisent par l'insertion ou la perte de certains bits mais aussi par un décalage, dans le temps, des données et des trames. Il en résulte donc une perte de la synchronisation trame.

Le but de l'invention est de prévoir un procédé et un dispositif qui permettent de corriger les glissements non-contrôlés, c'est-à-dire ceux qui ont pour effet, d'une part, le saut ou le redoublement d'un ou plusieurs bits dans une trame et, d'autre part, la perte de la synchronisation trame.

Pour détecter les glissements non-contrôlés, différentes méthodes ont été proposées parmi lesquelles on peut citer celle qui consiste à insérer dans les trames un mot pseudo-aléatoire et à détecter ce mot pour déterminer l'éventuel glissement. Cette méthode, qui n'est pas une méthode de correction mais de détection mais qui pourrait éventuellement être exploitée pour la mise en oeuvre d'une méthode de correction, présente néanmoins l'inconvénient de mobiliser un intervalle de temps pour l'insertion de ce mot. Par ailleurs sa mise en oeuvre nécessite des moyens importants.

On connaît également une méthode qui est décrite dans le document de brevet EP-A-301 481. le dispositif qui est décrit dans ce document a pour but d'éviter le processus de désynchronisation et de synchronisation d'un multiplexeur lors de l'apparition d'un glissement de bits dans une trame des données reçues par ce multiplexeur. Ce dispositif comporte un compteur auxiliaire et un compteur principal de trame dont les sorties d'impulsions de synchronisation sont respectivement reliées à deux entrées d'un dispositif d'identification de glissements de bits. En cas de synchronisme, il y a une impulsion de synchronisation à la sortie du compteur principal, et, dans le cas contraire, il y a une impulsion de synchronisation sur la sortie du compteur auxiliaire. L'intervalle de temps qui sépare ces deux impulsions de synchronisation est comparé dans le dispositif d'identification à une valeur prédéterminée. Si cet intervalle de temps dépasse cette valeur prédéterminée, la synchronisation du compteur principal de trame s'effectue normalement. Par contre, si cet intervalle reste dans les limites données par la valeur prédéterminée, le dispositif d'identification a une sortie qui passe à zéro, signifiant par là qu'il a détecté un glissement de bits. Selon la relation temporelle qui existe entre les impulsions de synchronisation du compteur auxiliaire et du compteur principal, relation qui est déterminée par le dispositif d'identification, ce dernier commande un circuit de commutation de la fréquence qui est reliée à l'entrée de cadence du compteur principal de trame pour lui délivrer soit des impulsions de cadence lente, soit des impulsions de cadence rapide. De ce fait, le compteur principal de trames compte plus lentement ou plus rapidement que le compteur de trame auxiliaire et les impulsions de synchronisation respectivement délivrées par ces compteurs se rapprochent jusqu'à ce qu'elles coïncident. Là, le dispositif de détermination de glissements revient dans sa position initiale.

Le but de la présente invention est de proposer un procédé de correction de séquences de données qui sont portées par une liaison numérique et un dispositif qui puisse d'insérer sur une liaison numérique. Par ailleurs, il est de proposer un tel procédé et un tel dispositif qui effectue une telle correction dans un minimum de temps, voire quasi-instantanément.

Ce but est atteint par la mise en oeuvre du procédé qui fait l'objet de la revendication 1 ainsi que du dispositif objet de la revendication 8. Des caractéristiques additionnelles font l'objet des revendications dépendantes 2 à 7, pour ce qui est du procédé de la revendication 1 et des revendications 9 et 10 pour ce qui est du dispositif de la revendication 8.

Ces caractéristiques, ainsi que d'autres, apparaîtront plus clairement à la lecture de la description suivante de deux exemples de réalisation de la présente invention, ladite description étant faite en relation avec les dessins joints, parmi lesquels:
la Fig. 1 est un ordinogramme montrant les différentes étapes d'un procédé de correction selon l'invention,
la Fig. 2 est un schéma synoptique d'un premier mode de réalisation d'un dispositif destiné à la mise en oeuvre d'un procédé de correction selon l'invention,
la Fig. 3 est un schéma synoptique d'un circuit de différence équipant un dispositif selon l'invention,
les Figs. 4a et 4b sont des diagrammes temporels montrant l'évolution en fonction du temps de certains signaux en présence de glissements non-contrôlés, et
la Fig. 5 montre un second mode de réalisation d'un dispositif selon l'invention présentant un perfectionnements par rapport au premier mode de réalisation.

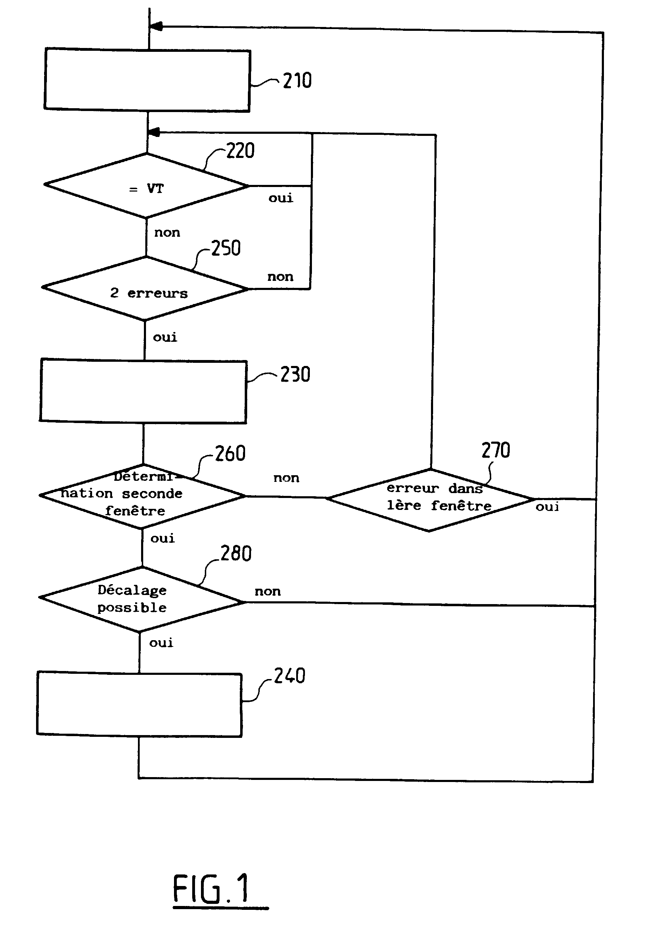

Un procédé de correction des glissements non contrôlés de séquences de données portées par des liaisons numériques selon l'invention est décrit en relation avec le schéma de la Fig. 1. Ces séquences de données sont arrangées sous forme de trames, par exemple une trame impaire suivie d'une trame paire comportant normalement un mot de verrouillage de trame VT.

Il consiste, dans une première étape 210, à déterminer, selon des critères prédéterminés, une première fenêtre de temps à l'intérieur de laquelle doit se trouver normalement le mot de verrouillage de trame VT.

A chaque séquence de données, étape 220, on analyse le mot compris dans ladite fenêtre de temps et on le compare au mot de verrouillage de trame VT.

Si le mot analysé dans ladite fenêtre de temps est égal au mot VT, on recommence l'étape 220 pour la séquence suivante.

Si le mot analysé est différent du mot de verrouillage de trame VT, on effectue alors, étape 230, une recherche, dans la séquence qui celle comportant l'erreur, du mot de verrouillage de trame VT pour pouvoir déterminer, selon des critères prédéterminés, une seconde fenêtre à l'intérieur de laquelle devrait maintenant se trouver ledit mot de verrouillage de trame VT.

Lorsque cette seconde fenêtre est déterminée, on détermine, étape 240, la différence de temps qui sépare une première fenêtre de temps d'une seconde fenêtre de temps pour commander le retard ou l'avance desdites séquences de données sur la ligne d'une durée sensiblement égale à cette différence de temps, ceci de manière à compenser le glissement. Puis on retourne à l'étape 210.

Le critère prédéterminé de détermination d'une première ou d'une seconde fenêtre peut consister en la détection du mot VT pendant une ou plusieurs séquences successives, par exemple une séquence.

La première et la seconde fenêtre de temps peuvent être validées après l'apparition du mot VT dans plusieurs séquences successives, par exemple deux séquences. Ces validations étant effectuées, on dira ci-après que l'on se trouve en reprise de verrouillage de trame.

Afin de ne pas effectuer une correction de glissement lorsqu'une erreur sur le mot VT résulte d'une simple erreur et non d'un glissement non-contrôlé, il est nécessaire qu'il n'y ait pas perte de verrouillage de trame dès la première détection, à l'étape 220, d'un mot différent du mot VT. Des critères de perte de verrouillage de trame peuvent consister en l'apparition d'un certain nombre de mots erronés consécutifs dans la première fenêtre, nombre par exemple égal à trois.

Ainsi donc, si, pendant la détermination de la seconde fenêtre de temps à l'étape 230, on n'a pas détecté en 250, dans la première fenêtre, plusieurs séquences consécutives comportant des mots différents du mot VT, on est en présence d'une simple erreur et, dans ce cas, on abandonne la détermination de l'étape 230 et on recommence l'étape 220 d'analyse du contenu de la première fenêtre.

Afin de pas effectuer de corrections en dehors des cas de glissement non-contrôlé, on effectue l'étape 240 de décalage seulement si la validation de la seconde fenêtre de temps peut avoir lieu. On contrôle donc ce critère à l'étape 260. Si elle n'a pas lieu, on contrôle, à l'étape 270, si le mot VT est détecté dans la première fenêtre. S'il l'est, c'est qu'il n'y a pas eu perte de verrouillage de trame. On peut donc recommencer le procédé à l'étape 220. S'il ne l'est pas, c'est qu'il y a eu perte de verrouillage de trame et, pour la détermination de la première fenêtre, on recommence à l'étape 210 du procédé.

Enfin, si le décalage s'avère ne pas être possible, ce qui est contrôlé à l'étape 280, on n'effectue pas totalement l'étape 240 et on recommence le procédé à l'étape 210.

On notera que les étapes 250, 260, 270 et 280 sont nécessaires pour éviter d'effectuer une opération de correction alors qu'il n'y pas eu glissement non-contrôlé mais une simple erreur.

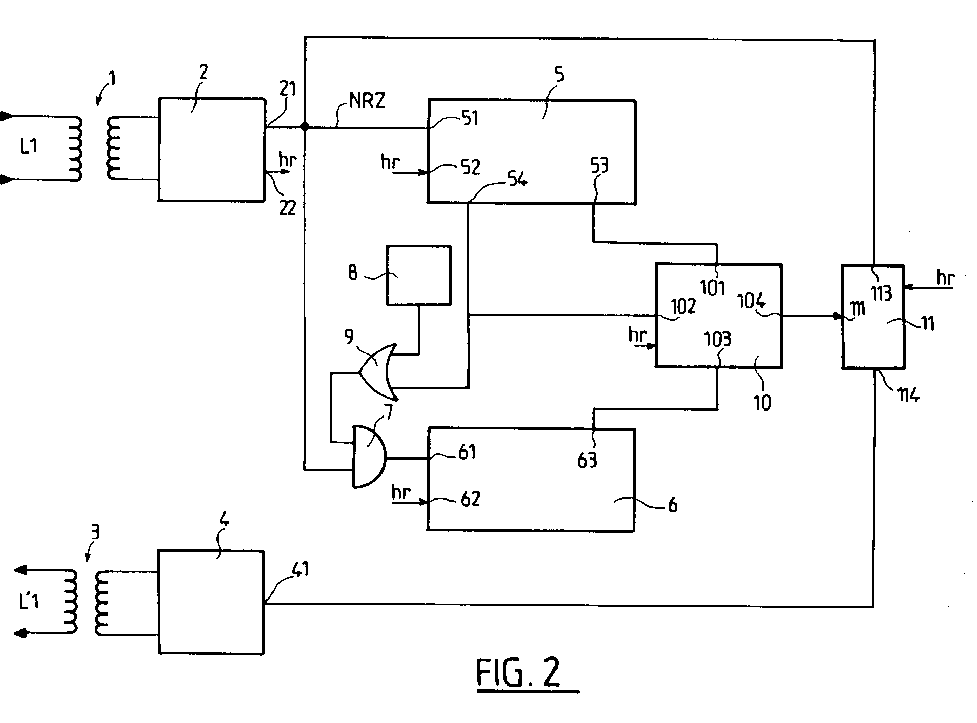

On a représenté à la Fig. 2 un schéma synoptique d'un dispositif de suppression de pertes de verrouillage de trame selon l'invention pour la mise en oeuvre du procédé précédemment décrit.

Il comprend un transformateur d'entrée 1 dont l'enroulement primaire est connecté à la partie L1 de la ligne de transmission dont on veut traiter les glissements, partie qui se trouve en amont du dispositif. L'enroulement secondaire est relié à un circuit de décodage 2 qui fournit, sur une première sortie 21, un train de bits NRZ codé NRZ représentatif des données sur la ligne de transmission L1 et, sur une seconde sortie 22, un signal d'horloge hr synchronisé avec les bits du signal binaire NRZ.

Il comprend encore un transformateur de sortie 3 dont l'enroulement primaire est relié à la sortie d'un circuit de codage 4 et l'enroulement secondaire sur la partie L'1 de la ligne de transmission en aval du dispositif. Le circuit de codage 4 a une entrée 41 qui reçoit, comme on le verra par la suite, un train de bits NRZ' correspondant au train de bits NRZ issu du circuit de décodage 2 et corrigé des glissements non-contrôlés.

La fonction essentielle des transformateurs 1 et 3 est d'isoler galvaniquement les parties L1 et L'1 de la ligne de transmission des circuits actifs du dispositif.

La ligne de transmission L1, L'1 est par exemple du type où les données sont transmises multiplexées dans le temps et sous forme de signaux codés par impulsions, dits signaux MIC. Les données sont portées par des trames constituées d'intervalles de temps, dits par la suite IT, par exemple au nombre de trente deux, une trame paire succédant dans le temps à une trame impaire. Chaque intervalle de temps porte un octet de données. L'IT numéro zéro, dit IT0, de la trame paire porte un octet de valeur prédéterminée, dit octet de verrouillage de trame ou VT. Par contre, l'octet IT0 de la trame impaire ne comporte qu'un bit prédéterminé qui est un bit de contrôle.

Les lignes de transmission que le dispositif de l'invention peut corriger des glissements non-contrôlés ont par exemple un débit numérique de 2 Mbits/seconde, 8 Mbits/seconde, 34 Mbits/seconde, voire 140 Mbits/seconde et parfois plus ou des valeurs différentes lorsqu'il s'agit de standards américains: 1,5 Mbits/seconde, 6 Mbits/seconde, etc.

Le dispositif de l'invention comporte un premier circuit de traitement 5 dont une première entrée 51 est reliée à la sortie 21 portant le signal NRZ du circuit de décodage 2 et dont une seconde entrée 52 est reliée à la sortie 22 du circuit 2 pour y recevoir le signal d'horloge bit hr.

Le fonctionnement du circuit de traitement 5 est le suivant.

A la mise en marche, il analyse, en synchronisme avec le signal d'horloge bit hr sur son entrée 52, le train de bits NRZ sur son entrée 51. Une fois le mot de verrouillage de trame VT détecté, il détermine, selon un critère prédéterminé, une fenêtre de temps de recherche à l'intérieur de laquelle il doit détecter, à la prochaine trame paire et aux trames paires suivantes, le mot de verrouillage VT. Le critère de reprise de détermination de fenêtre peut consister en la détection du mot VT dans les fenêtres d'une ou plusieurs trames paires successives, par exemple une.

Lorsque le circuit 5 a déterminé une fenêtre de temps, il peut, selon un nouveau critère, valider cette fenêtre après détection du mot VT, dans une ou plusieurs fenêtres successives, par exemple deux. Il est alors dit verrouillé sur la trame du signal qui est présent sur son entrée 51.

En fonctionnement normal, il analyse, toujours en synchronisme avec le signal d'horloge hr, les signaux de données NRZ présents sur son entrée 51 et délivre, sur une sortie 53, dite sortie de fenêtre, une impulsion représentative de la fenêtre de temps qu'il a déterminé. Cette impulsion a son front montant sur le début d'une trame paire telle que le circuit 5 l'a détectée.

Il délivre également, sur une sortie 54, un signal de détection de mot VT à un niveau zéro lorsqu'il a détecté, dans le train de bits NRZ et pendant la fenêtre de temps de recherche qu'il a déterminée, le mot de verrouillage VT et à un niveau un dans le cas contraire. Ce signal reste au niveau tel que défini ci-dessus tant que de nouvelles conditions ne sont pas venues le modifier.

Le circuit 5 est en perte de verrouillage de trame lorsqu'il n'a pas détecté le mot VT dans trois IT0 consécutifs de trames paires. C'est seulement lorsqu'il est en perte de verrouillage de trame, qu'il peut déterminer une nouvelle fenêtre de temps et se reverrouiller en trame.

Le dispositif de l'invention comporte encore un second circuit de traitement 6 dont une première entrée 61 est reliée à la sortie d'une porte ET 7 et une seconde entrée 62 à la sortie 22 du circuit 2 pour y recevoir le signal d'horloge bit hr.

Une première entrée de la porte ET 7 est reliée à la sortie 21 portant le signal NRZ du circuit de décodage 2.

Un circuit d'initialisation 8 a sa sortie qui est reliée à une première entrée d'une porte OU 9 dont la seconde entrée est reliée à la sortie 54 du circuit 5. La sortie de la porte OU 9 est reliée à la seconde entrée de la porte 7.

A l'initialisation, le circuit 8 délivre une impulsion à un niveau un d'une durée donnée, par exemple 100 ms. La sortie de la porte OU 9 est alors à un et la porte ET 7 est passante. Le circuit 6 reçoit donc pendant cette période le signal NRZ issu du circuit de décodage 2.

Le circuit 6 a un fonctionnement similaire au circuit 5 à la différence qu'il ne détecte pas en permanence le mot VT. A l'initialisation, il détermine une fenêtre de temps et se verrouille en trame, selon les mêmes critères de détermination et de reprise de verrouillage de trame que ceux du circuit 5.

Après initialisation, le circuit 8 délivre un niveau zéro et la porte OU 9 transmet le signal issu de la sortie 54 du circuit 5 à l'entrée de la porte 7.

En fonctionnement normal, le circuit 5 détectant bien le mot VT dans sa fenêtre, sa sortie 54 délivre un signal à niveau zéro. La porte ET 7 n'est donc pas passante. Le circuit 6 délivre périodiquement, sur sa sortie de fenêtre 63, une impulsion représentative de la fenêtre qu'il a déterminée pendant la phase d'initialisation. Tant qu'il n'y a pas de glissement, cette fenêtre est synchrone avec le début des trames paires.

La sortie de fenêtre 53 du circuit de traitement 5 est reliée à l'entrée 101 d'un circuit de différence 10. La sortie détection 54 du circuit 5 est encore reliée à une seconde entrée 102 du circuit 10.

La sortie de fenêtre 63 du second circuit de traitement 6 est reliée à une troisième entrée 103 du circuit de différence 10. Celui-ci reçoit également le signal d'horloge bit hr issu du circuit de décodage 2.

La fonction du circuit 10 est la suivante: il mesure, lorsqu'un niveau un est présent sur son entrée 102, la différence de temps entre les fronts montants ou descendants des signaux présents sur ses deux entrées 101 et 103 et calcule, à partir de cette différence de temps, le retard ou l'avance cumulé engendré par tous les glissements depuis l'initialisation du système. Il délivre, sur sa sortie 104 un signal représentatif de ce retard exprimé en nombre d'impulsions d'horloge bit hr.

La sortie 104 du circuit de différence 10 est reliée à l'entrée 111 correspondante d'un circuit de retard 11 à délai de retard variable dont l'entrée de signal 113 est reliée à la sortie signal de données 21 du circuit de décodage 2 et dont la sortie 114 est reliée à l'entrée 41 du circuit de codage 4. Le délai de retard auquel sont soumis les signaux à l'entrée 113 du circuit 11 est égal à la valeur algébrique du retard cumulé calculé par le circuit de différence 10.

Le fonctionnement du dispositif selon l'invention est maintenant décrit.

A la mise en route du dispositif, les circuits de traitement 5 et 6 recherchent le mot de verrouillage VT dans les trains de bits présents sur leurs entrées 51 et 61 et déterminent leurs fenêtres de temps de recherche du mot VT, comme cela a déjà été expliqué. Puis, ils se verrouillent en trame sur le signal de sortie 21 du circuit 2.

Le circuit 5 analyse le train de bits à la sortie du circuit de décodage 2 et, en particulier, il compare le mot qui est présent dans la fenêtre qu'il a précédemment déterminée avec le mot VT normalement contenu dans l'IT0 des trames paires. Si ces mots sont égaux, sa sortie 54 reste à un niveau zéro. La porte ET 7 a donc sa sortie qui est aussi à un niveau zéro si bien que le second circuit 6 ne reçoit toujours aucun signal sur son entrée 61. Par ailleurs, le niveau zéro présent sur la sortie 54 du circuit 5 se retrouve sur l'entrée 102 du circuit de différence 10 qui ne modifie donc pas le signal de retard présent sur sa sortie 104.

Par conséquent, le circuit de retard 11 ne modifie pas lui non plus le temps de retard dont il affecte le train de bits présent sur son entrée 113.

Lorsque, dans une trame, un ou plusieurs bits sont répétés ou au contraire ont disparu, il y a glissement non-contrôlé, c'est-à-dire que ce glissement affecte non seulement les informations portées par les trames mais également le verrouillage de trame. Dans ce cas, le mot détecté par le premier circuit 5 dans sa fenêtre de temps de recherche n'est plus égal au mot de verrouillage de trame VT de l'IT0 paire. Le niveau sur sa sortie 54 passe à un au moment où la trame paire est détectée.

La porte ET 7 devient alors passante si bien que le second circuit de traitement 6 reçoit le signal de données issu du circuit de décodage 2. Le circuit 6 est placé en perte de verrouillage de trame depuis l'initialisation, donc il peut dès maintenant déterminer une nouvelle fenêtre et les impulsions sur sa sortie 63 sont maintenant synchrones avec l'apparition des mots VT.

Le circuit 5 est placé en perte de verrouillage de trame seulement trois trames paires après le glissement, et c'est seulement à ce moment là qu'il détermine, selon les critères précédemment vus, une nouvelle fenêtre et qu'il la valide.

Ainsi, au moment où la nouvelle seconde fenêtre de temps est déterminée, la première est inchangée si bien qu'elles se trouvent décalées l'une par rapport à l'autre d'une durée qui est égale à la grandeur du glissement.

Lorsque le signal 54 passe à un du fait de l'apparition d'un glissement, le circuit 10 déclenche, au premier arrivé des signaux de fenêtre 53, 63 sur ses entrées 101 et 103, un compteur/décompteur qui compte ou décompte, selon que c'est l'un ou l'autre des signaux qui est arrivé en premier, le nombre d'impulsions d'horloge bit hr jusqu'à l'arrivée du second de ces signaux. Ce compte positif ou négatif est additionné algébriquement au signal de retard déjà présent sur sa sortie 104. Ainsi, le nouveau retard calculé est délivré sur la sortie 104 du circuit 10.

On remarquera que ce compte, exprimé en nombre de bits, correspond au nombre de bits ajoutés ou disparus dans la trame ayant subi le glissement. Le circuit de retard 11 affecte du retard calculé par le circuit 10 le signal issu du circuit de décodage 2.

A la troisième trame paire pour laquelle aucun mot de verrouillage de trame VT n'a été détecté, le premier circuit de traitement 5 entame une recherche de verrouillage de trame. Ainsi, à la quatrième trame paire, il détecte le mot VT. Sa sortie 54 passe ensuite à zéro et la porte ET 7 n'est plus passante. Le circuit 6 ne reçoit plus de signaux sur son entrée 61.

Les circuits de traitement 5 et 6 peuvent être réalisés à partir de composants discrets, notamment des compteurs, comparateurs, etc., mais également, de manière préférentielle, avec des circuits spécialisés communément nommés dans la technique: système de perte et reprise de verrouillage de trame.

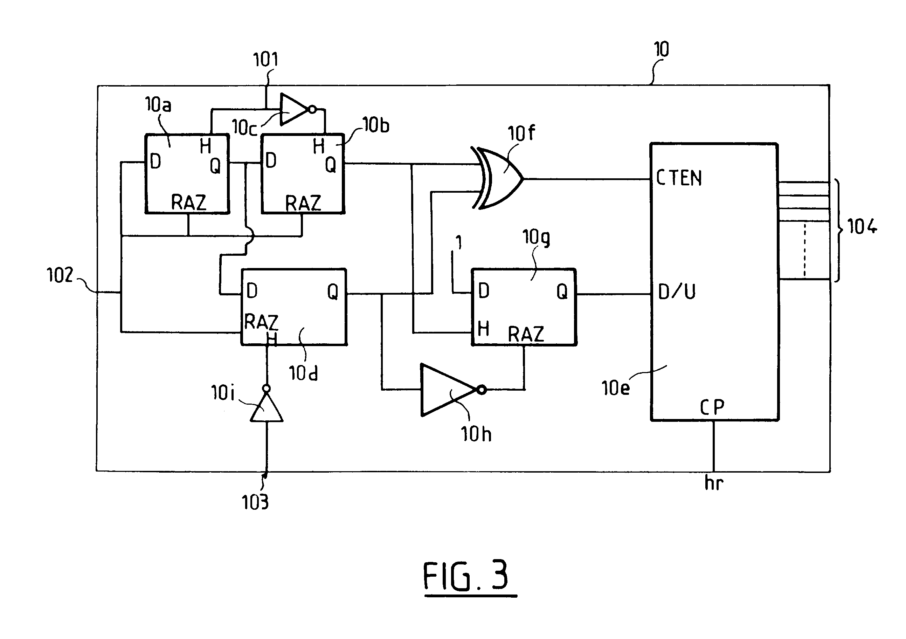

On a représenté à la Fig. 3 un exemple de réalisation du circuit de différence 10 montré à la Fig. 2.

Il comprend un premier circuit de retard 10a destiné, lorsque le signal sur l'entrée 102 est à un, à retarder de deux trames, une paire et une impaire, le signal présent sur l'entrée 101 du circuit 10. Il comporte un second circuit de retard 10b qui retarde de plusieurs bits le signal issu de la sortie Q du circuit 10a. Le nombre de bits de retard est déterminé par la largeur de l'impulsion de fenêtre 53 issue du circuit 5 et présente sur l'entrée 101 du circuit 10.

Les circuits de retard 10a et 10b sont par exemple constitués, comme cela est montré à la Fig. 3 par des bascules de type D. La bascule 10a a ses entrées D et RAZ reliées à l'entrée 102 et l'entrée H à l'entrée 101. La bascule 10b a son entrée D reliée à la sortie Q de la bascule 10a, son entrée RAZ à l'entrée 102 et son entrée H à l'entrée 101 via une porte non 10c.

Le circuit 10 comporte encore une bascule 10d de type D dont l'entrée D est reliée à la sortie Q de la bascule 10a, l'entrée horloge H à l'entrée 103 via une porte inverseuse 10i, et l'entrée RAZ à l'entrée 102 du circuit 10.

Un compteur/décompteur 10e possède une entrée d'autorisation de comptage/décomptage CTEN reliée à la sortie d'une porte OU exclusif 10f dont les deux entrées sont respectivement reliées à la sortie Q du circuit de retard 10b et à la sortie Q de la bascule 10d.

Il comporte enfin une bascule 10g du type D dont l'entrée D est reliée à un niveau 1, l'entrée remise à zéro RAZ reliée à la sortie d'une porte inverseuse 10h dont l'entrée est reliée à la sortie Q de la bascule 10d. L'entrée horloge H de la bascule 10g est reliée à la sortie du circuit de retard 10b et sa sortie Q est reliée à l'entrée comptage/décomptage D/U du compteur/décompteur 10e.

Le compteur/décompteur 10e a une entrée horloge CP pour recevoir le signal d'horloge bits hr. Sa sortie est constituée d'un bus 104 à plusieurs fils 104 portant la valeur du retard cumulé exprimé en nombre d'impulsions d'horloge hr.

Le compteur/décompteur est par exemple constitué d'un ou plusieurs circuits du type HC191 ou équivalent.

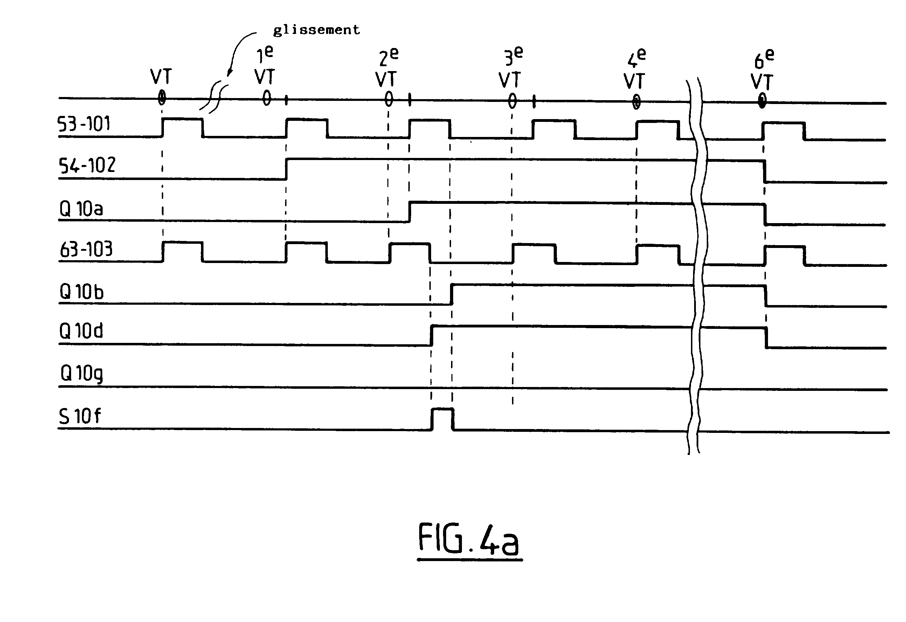

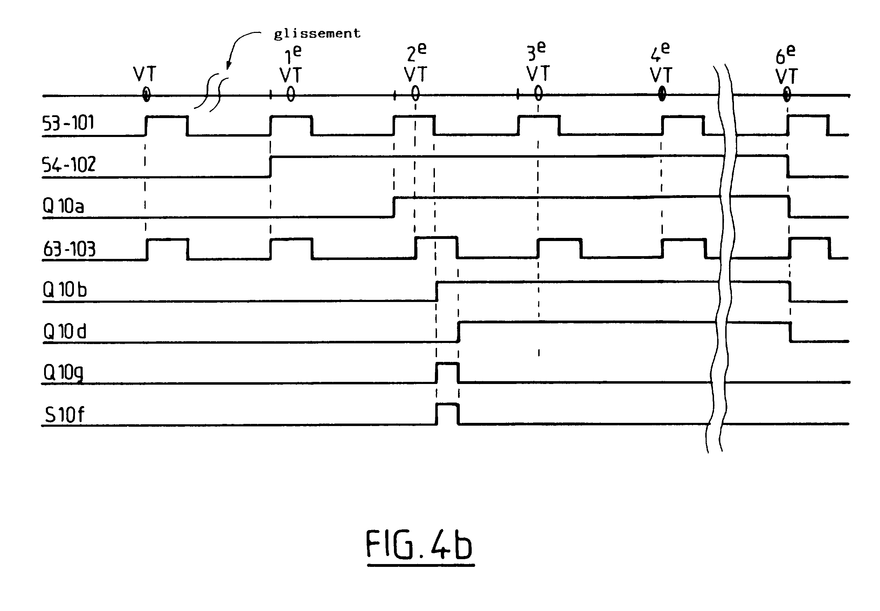

On a représenté sur les Figs. 4a et 4b des diagrammes des temps de signaux issus du circuit 10 réalisé selon le synoptique de la Fig. 3.

Sur ces Figs.4a et 4b, on a représenté par des tirets verticaux, le commencement de l'intervalle de temps où le circuit 5 de la Fig. 2 recherche le mot VT et, par un petit cercle marqué VT, l'apparition du mot VT. Les signaux de fenêtre 53 et 63 sont respectivement les signaux représentatifs des fenêtres des circuits de traitement 5 et 6.

A la Fig. 4a, on peut constater l'apparition d'un glissement responsable d'une disparition d'un certain nombre de bits. Le mot VT apparaît en avance par rapport à la fenêtre de temps du circuit 5 si bien que celui-ci a sa sortie 54 qui passe au niveau un à la fenêtre suivant l'apparition du glissement. La sortie Q10a du circuit 10a est retardée de deux trames (une trame paire et une trame impaire). En même temps que le circuit 5 a sa sortie 54 qui passe à un, le circuit 6 recherche le mot VT pour déterminer sa fenêtre et se verrouiller dessus. La sortie 63 qui porte le signal de fenêtre du circuit 6 sera synchrone avec le mot VT dès l'apparition du deuxième mot VT après le glissement.

L'impulsion en Q10a est quant à elle retardée d'une durée égale à la largeur de l'impulsion de fenêtre (voir signal Q10b). La sortie Q de la bascule 10d passe à un sur le front descendant de l'impulsion 103 au moment où le circuit 6 a déterminé sa nouvelle fenêtre. Entre ce moment et celui où le signal à la sortie Q10b passe aussi à un, la sortie de la bascule 10g reste à zéro puisque son entrée RAZ (reliée à Q10d via la porte inverseuse 10h) est à zéro, avec pour conséquence que le compteur/décompteur 10e est commandé en comptage. La sortie S10f passe à un pendant cette période de temps, autorisant le comptage uniquement pendant cette période.

A la Fig. 4b, l'apparition d'un glissement est le résultat d'une répétition d'un certain nombre de bits entraînant l'apparition du mot VT en retard par rapport à la fenêtre de temps du circuit 5, celui-ci ayant alors sa sortie 54 qui passe au niveau un à la fenêtre suivant l'apparition du glissement. La sortie Q10a du circuit 10 est retardée de deux trames (une trame paire et une trame impaire). En même temps que le circuit 5 a sa sortie 54 qui passe à un, le circuit 6 recherche le mot VT pour se verrouiller en trame.

Le signal Q10a est retardé de plusieurs bits (voir signal Q10b). La sortie Q de la bascule 10d passe à un sur le front descendant de l'impulsion 103 alors que le circuit 6 a déterminé sa fenêtre. Entre le moment où le signal à la sortie Q10b du circuit 10b passe aussi à un et celui où le signal Q10d passe également à un, la sortie de la bascule 10g passe à un, recopiant le signal à un qui est sur son entrée D sur le front montant de l'impulsion d'horloge Q10b, avec pour conséquence que le compteur/décompteur 10e est commandé en décomptage. La sortie S10f passe à un pendant cette période de temps, autorisant le décomptage uniquement pendant cette période.

On notera que le circuit 5 est en reprise de verrouillage de trame après cinq apparitions successives du mot VT après le glissement. Par contre, la sortie 54 passe à zéro à la sixième apparition du mot VT. Lorsqu'elle passe à zéro, les bascules 10a, 10b et 10d ont leurs sorties Q qui passent également à zéro.

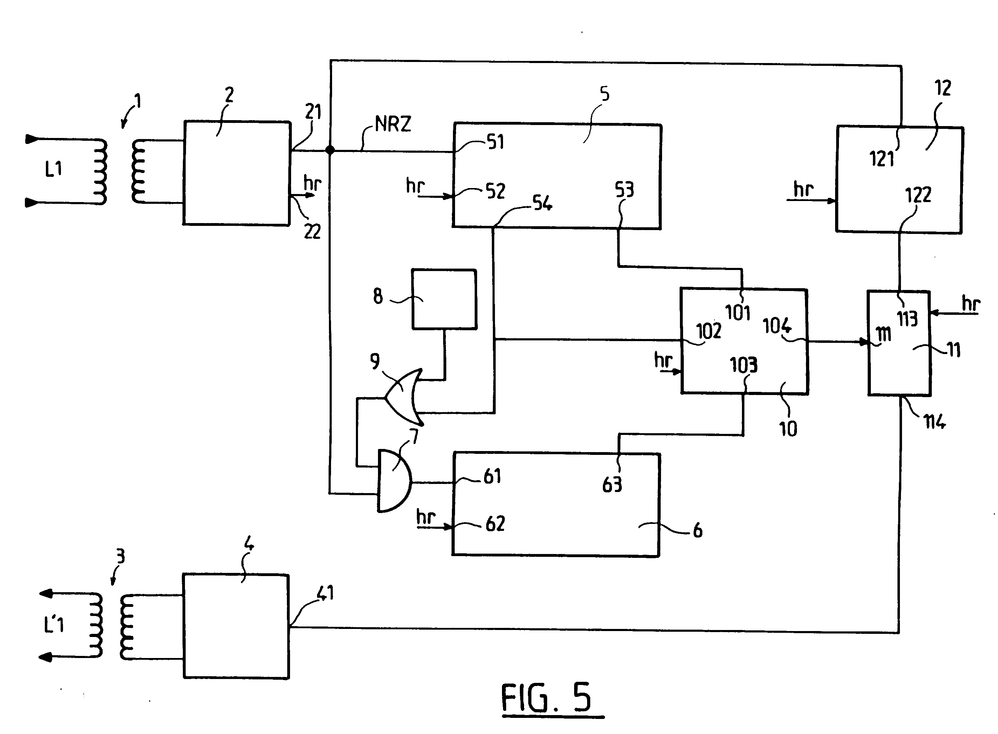

On a montré à la Fig. 5 un autre mode de réalisation d'un dispositif de l'invention. Il diffère de celui qui est décrit en relation avec la Fig. 2 en ce qui comporte en outre une ligne à retard dont l'entrée 121 est reliée à la sortie 21 du circuit de décodage 2 pour y recevoir les signaux de données NRZ et dont la sortie 122 est reliée à l'entrée 113 du circuit de retard 11. La ligne à retard 12 est également reliée à la sortie horloge 22 du circuit de décodage 2 pour y recevoir le signal hr. Elle introduit un délai de retard qui est environ de 2 trames de manière à ce que le décalage de temps introduit par le circuit de retard 11 intervienne sur la trame sensiblement au moment du glissement. Ce délai de retard est d'environ 512 bits (32 IT x 8 bits x 2 trames).

On notera que ce mode de réalisation introduit un retard dans la transmission des données si bien qu'il n'est possible de l'utiliser que si l'on n'a pas de contrainte sur le temps de propagation.

## Revendications

1. Procédé de correction de glissements non contrôlés de séquences de données portées par des liaisons numériques, chaque séquence étant arrangée en trames elles-mêmes constituées de plusieurs mots respectivement dans des intervalles de temps consécutifs, l'une desdites trames de chaque séquence comportant dans un intervalle de temps prédéterminé un mot de verrouillage de trame VT, caractérisé en ce qu'il consiste à:
a) à rechercher dans la séquence actuelle le mot de verrouillage VT afin de déterminer, selon un critère prédéterminé, une première fenêtre de temps correspondant à un intervalle de temps où doit se trouver normalement le mot de verrouillage de trame VT,
b) analyser le mot compris dans ladite fenêtre de temps et le comparer au mot de verrouillage de trame VT,
c) si le mot analysé dans ladite fenêtre est différent du mot de verrouillage de trame VT, rechercher, dans la séquence qui suit ladite fenêtre où se trouve l'erreur constatée, le mot de verrouillage de trame VT afin de déterminer, selon un critère prédéterminé, une seconde fenêtre correspondant à un intervalle de temps où doit se trouver maintenant ledit mot de verrouillage de trame VT,
d) puis, lorsque cette seconde fenêtre est déterminée, déterminer la valeur de la différence de temps qui sépare une première fenêtre de temps d'une seconde fenêtre de temps pour commander le retard ou l'avance desdites séquences de données sur la liaison numérique d'une durée sensiblement égale à ladite valeur de différence de temps de manière à compenser le glissement de ladite durée, et
e) retourner à l'étape a).

2. Procédé selon la revendication 1, caractérisé en ce que le critère de détermination d'une fenêtre de temps consiste en la détection du mot de verrouillage de trame VT dans la même fenêtre de temps de plusieurs séquences successives.

3. Procédé selon la revendication 1, caractérisé en ce que le critère de détermination d'une fenêtre de temps consiste en la détection du mot de verrouillage de trame VT dans la même fenêtre de temps de deux séquences successives.

4. Procédé selon une des revendications précédentes, caractérisé en ce que, si, pendant la détermination de la seconde fenêtre de temps, on ne détecte pas, dans ladite première fenêtre, plusieurs séquences consécutives comportant des mots différents du mot de verrouillage de trame VT, on abandonne ladite détermination et on effectue l'étape b) d'analyse du contenu de la première fenêtre.

5. Procédé selon une des revendications 1 à 4, caractérisé en ce que, si, pendant la détermination de la seconde fenêtre de temps, on ne détecte pas, dans ladite première fenêtre, trois séquences consécutives comportant des mots différents du mot de verrouillage de trame VT, on abandonne ladite détermination et on effectue l'étape b) d'analyse du contenu de la première fenêtre.

6. Procédé selon une des revendications précédentes, caractérisé en ce qu'on effectue l'étape de décalage seulement si le critère de détermination de la seconde fenêtre de temps est atteint.

7. Procédé selon une des revendications précédentes, caractérisé en ce que, si le critère de détermination de la seconde fenêtre de temps n'est pas atteint, soit le mot VT est détecté dans la première fenêtre et on effectue l'étape b) du procédé, soit il n'est pas détecté et on effectue l'étape a) du procédé.

8. Dispositif de correction de glissements non-contrôlés de séquences de données portées par des liaisons numériques, chaque séquence étant arrangée en trames elles-mêmes constituées de plusieurs mots respectivement dans des intervalles de temps consécutifs, l'une desdites trames de chaque séquence comportant dans un intervalle de temps prédéterminé un mot de verrouillage de trame VT, caractérisé en ce qu'il comprend essentiellement:
un premier circuit de traitement (5) dont l'entrée (51) reçoit les signaux de séquences de données, ledit premier circuit (5) comportant, d'une part, une première sortie de fenêtre (53) pour délivrer un signal représentatif d'une première fenêtre de temps correspondant à un intervalle de temps où doit se trouver normalement le mot de verrouillage de trame VT et, d'autre part, une seconde sortie (54) rendue active lorsque ledit circuit (5) n'a pas détecté le mot de verrouillage de trame VT dans ladite fenêtre de temps,
un second circuit de traitement (6) dont l'entrée (61) reçoit les signaux de séquences de données, ledit second circuit (6) comportant une sortie de fenêtre (63) pour délivrer un signal représentatif d'une seconde fenêtre de temps correspondant à un intervalle de temps où doit se trouver le mot de verrouillage de trame VT, ledit second circuit de traitement (6) étant rendu actif en même temps que la seconde sortie (54) du circuit de traitement (5),
un circuit de différence (10) comportant, d'une part, deux entrées (101 et 103) respectivement reliées aux sorties (53 et 63) portant les signaux de fenêtre respectivement délivrés par les circuits de traitement (5 et 6) et, d'autre part, une entrée (102) reliée à la sortie de détection (54) du premier circuit de traitement (5), ledit circuit de différence (10) étant destiné, d'une part, à déterminer la valeur de la différence de temps qui sépare la première fenêtre de temps déterminée par ledit premier circuit de traitement (5) de ladite seconde fenêtre de temps déterminée par ledit second circuit de traitement (6) et, d'autre part, à délivrer un signal représentatif de ladite valeur de différence de temps, et
un circuit de retard (11) à retard variable dont une entrée (111) est reliée au circuit de différence (10) pour y recevoir ledit signal représentatif de ladite valeur de différence de temps et qui est destinée à modifier le retard ou l'avance desdites séquences de données sur la liaison numérique d'une durée égale à la différence de temps séparant une première fenêtre d'une seconde fenêtre.

9. Dispositif selon la revendication 8, caractérisé en ce que le premier circuit de traitement (5) entame une recherche du mot de verrouillage de trame afin de déterminer une nouvelle fenêtre de temps après la non-détection du mot de verrouillage de trame dans trois fenêtres consécutives.

10. Dispositif selon la revendication 8 ou 9, caractérisé en ce que l'entrée (113) du circuit de retard (11) est reliée à la sortie (122) d'une ligne à retard (12) dont le délai de retard est tel que la modification du retard ou de l'avance du circuit de retard intervienne sensiblement au moment de la non-détection par le premier circuit de traitement du mot de verrouillage de trame.

## Patentansprüche

1. Verfahren für das Ausregeln des unkontrollierten Schlupfs von über numerische Verbindungen übertragenen Datenfolgen, wobei jede dieser Datenfolgen in Teilbildern angeordnet ist, die aus mehreren Worten bestehen, die jeweils in aufeinanderfolgenden Zeitintervallen angeordnet sind, wobei eines der Teilbilder jeder Datenfolge in einem vorbestimmten Zeitintervall einen Sperrcode VT für das Teilbild enthält,
**dadurch gekennzeichnet, daß**
a) in der aktuellen Datenfolge der Sperrcode VT gesucht wird, um nach einem bestimmten Kriterium ein erstes Zeitfenster zu bestimmen, welches einem Zeitintervall entspricht, in dem sich normalerweise der Sperrcode VT für das Teilbild befinden muß,
b) das in diesem Zeitfenster enthaltene Wort analysiert und mit dem Sperrcode VT des Teilbildes verglichen wird,
c) und wenn sich das in diesem Zeitfenster analysierte Wort von dem Sperrcode VT des Teilbildes unterscheidet, wird in der diesem Zeitfenster, welches den festgestellten Fehler enthält, folgenden Datenfolge der Sperrcode VT des Teilbildes gesucht, um nach einem bestimmten Kriterium ein zweites Zeitfenster zu bestimmen, welches einem Zeitintervall enspricht, in dem sich jetzt der Sperrcode VT des Teilbildes befinden muß,
d) und daß, nachdem dieses zweite Zeitfenster bestimmt worden ist, der Wert des Zeitunterschiedes berechnet wird, welcher ein erstes Zeitfenster von einem zweiten Zeitfenster trennt, um die Verzögerung oder die Voreilung dieser Datenfolgen auf der numerischen Verbindung für eine Dauer zu steuern, welche weitgehend gleich dem Wert des Zeitunterschiedes ist, um den Schlupf dieser Dauer auszugleichen,
e) und Rückkehr zum Schritt a).

2. Verfahren nach Anspruch 1,
**dadurch gekennzeichnet, daß**
das Kriterium für die Bestimmung eines Zeitfensters in der Suche des Sperrcodes VT des Teilbildes in dem gleichen Zeitfenster von mehreren aufeinanderfolgenden Datenfolgen besteht.

3. Verfahren m Schritt a nach Anspruch 1,
**dadurch gekennzeichnet, daß**
das Kriterium für die Bestimmung eines Zeitfensters in der Suche des Sperrcodes VT des Teilbildes in dem gleichen Zeitfenster von zwei aufeinanderfolgenden Datenfolgen besteht.

4. Verfahren nach einem der vorausgegangenen Ansprüche,
**dadurch gekennzeichnet, daß**
wenn während der Bestimmung des zweiten Zeitfensters in dem ersten Zeitfenster nicht mehrere aufeinanderfolgende Datenfolgen festgestellt werden, welche unterschiedliche Sperrcode VT des Teilbildes aufweisen, diese Bestimmung aufgegeben wird und der Schritt b) der Analyse des Inhalts des ersten Zeitfensters durchgeführt wird.

5. Verfahren nach einem der Ansprüche 1 bis 4,
**dadurch gekennzeichnet, daß**
wenn während der Bestimmung des zweiten Zeitfensters in dem ersten Zeitfenster nicht drei aufeinanderfolgende Datenfolgen festgestellt werden, welche sich von dem Sperrcode VT des Teilbildes unterscheidende Worte aufweisen, so wird diese Bestimmung aufgegeben und der Schritt b) der Analyse des Inhalts des ersten Zeitfensters durchgeführt.

6. Verfahren nach einem der vorausgegangenen Ansprüche,
**dadurch gekennzeichnet, daß**
der Schiftschritt erst dann durchgeführt wird, wenn das Kriterium für die Bestimmung des zweiten Zeitfensters erreicht ist.

7. Verfahren nach einem der vorausgegangenen Ansprüche,
**dadurch gekennzeichnet, daß**
wenn das Kriterium für die Bestimmung des zweiten Zeitfensters nicht erreicht wird, entweder der Sperrcode VT in dem ersten Zeitfenster gefunden und der Schritt b) des Verfahrens durchgeführt wird, oder wenn er nicht gefunden wird, führt man den Schritt a) des Verfahrens durch.

8. Vorrichtung für das Ausregeln des unkontrollierten Schlupfs von über numerische Verbindungen übertragenen Datenfolgen, wobei jede der Datenfolgen in Teilbildern angeordnet ist, die aus mehreren Worten bestehen, die jeweils in aufeinanderfolgenden Zeitintervallen angeordnet sind, wobei eines der Teilbilder jeder Datenfolge in einem vorbestimmten Zeitintervall einen Sperrcode VT für das Teilbild enthält,
**dadurch gekennzeichnet, daß**
diese Verrichtung im wesentlichen folgendes umfaßt:
- einen ersten Verarbeitungskreis (5), dessen Eingang (51) Signale von Datenfolgen empfängt, wobei dieser erste Verarbeitungskreis (5) einerseits einen ersten Fensterausgang (53) enthält, um ein für ein erstes Zeitfenster repräsentatives Signal auszusenden, welches einem Zeitintervall entspricht, in dem sich normalerweise der Sperrcode VT des Teilbildes befinden muß, und andererseits einen zweiten Ausgang (54) enthält, welcher aktiviert wird, wenn der Verarbeitungskreis (5) den Sperrcode VT des Teilbildes in diesem Zeitfenster nicht gefunden hat,
- einen zweiten Verarbeitungskreis (6), dessen Eingang (61) die Signale von Datenfolgen empfängt, wobei dieser zweite Verarbeitungskreis (6) einen Fensterausgang (63) aufweist, der ein für ein zweites Zeitfenster repräsentatives Signal aussendet, welches einem Zeitintervall entspricht, in dem sich der Sperrcode VT für das Teilbild befinden muß, wobei dieser zweite Verarbeitungskreis (6) gleichzeitig mit dem zweiten Ausgang (54) des Verarbeitungskreises (5) aktiviert wird,
- eine Differenzierschaltung (10), welche einerseits zwei Eingänge (101 und 103) aufweist, die jeweils an die Ausgänge angeschlossen sind, welche die von den Verarbeitungskreisen (5 und 6) ausgesendeten Fenstersignale tragen, und andererseits einen Eingang (102) enthält, welcher an den Datenausgang (54) des ersten Verarbeitungskreises (5) angeschlossen ist, wobei diese Differenzierschaltung (10) einerseits dafür bestimmt ist, den Wert des Zeitunterschiedes zu berechnen, welcher das erste von dem ersten Verarbeitungskreis (5) bestimmte Zeitfenster von dem durch den zweiten Verarbeitungskreis (6) bestimmte zweite Zeitfenster trennt, und andererseits dazu dient, ein für diesen Zeitunterschied repräsentatives Signal auszusenden,
- ein Verzögerungskreis (11) mit variabler Verzögerung, dessen Eingang (111) an die Differenzierschaltung (10) angeschlossen ist, um dort das für den Zeitunterschied repräsentative Signal zu empfangen und dafür bestimmt ist, die Verzögerung oder die Voreilung der Datenfolgen auf der numerischen Verbindung für eine Dauer zu verändern, die gleich dem Zeitunterschied ist, welcher ein erstes Zeitfenster von einem zweiten Zeitfenster trennt.

9. Vorrichtung nach Anspruch 8,
**dadurch gekennzeichnet, daß**
der erste Verarbeitungskreis (5) die Suche nach dem VT-Wort einleitet, um ein neues Zeitfenster zu berechnen, wenn des VT-Wort das Teilbildes nicht in drei aufeinanderfolgenden Zeitfenstern gefunden worden ist.

10. Vorrichtung nach einem der Ansprüche 8 oder 9,
**dadurch gekennzeichnet, daß**
der Eingang (113) der Laufzeitkette (11) an den Ausgang (122) einer Verzögerungsleitung (12) angeschlossen ist, deren Verzögerungszeit so bemessen ist, daß die Veränderung der Verzögerung oder der Voreilung der Laufzeitkette weitgehend zu dem Zeitpunkt eintritt, an dem der erste Verarbeitungskreis das VT-Wort des Teilbildes nicht gefunden hat.

## Claims

1. A procedure for the correction of uncontrolled slippage in data sequences carried on digital links, each sequence being arranged in frames, the frames themselves being constituted by several words respectively at consecutive time intervals, one of the said frames of each sequence comprising, in a predetermined interval of time, a frame locking word VT, characterised in that it consists of:
a) Searching in the current sequence for the locking word VT, in order to determine, in accordance with a predetermined criterion, a first time window corresponding to an interval of time in which the frame locking word VT would normally occur;
b) Analysing the word included in the said time window, and comparing it to the frame locking word VT;
c) If the word analyzed in the said window differs from the frame locking word VT, searching, in the sequence which follows the said window in which the detected error is located, the frame locking word VT, in order to determine, in accordance with a predetermined criterion, a second window corresponding to an interval of time in which the said frame locking word VT should now be located;
d) Then, when this second window has been determined, to determine the value of the time differential which separates a first time window from a second time window, in order to control the delay or advance of the said data sequences on the digital link, of a duration approximately equal to the said time differential value, in such a way as to compensate for the slippage of the said duration, and
e) Returning to stage a).

2. A process according to Claim 1, characterised in that the criterion of determination of time window consists of the detection of a frame locking word VT in the same time window of several successive sequences.

3. A process according to Claim 1, characterised in that the criterion for determination of a time window consists of the detection of the frame locking word VT in the same time window of two successive sequences.

4. A process according to one of the preceding Claims, characterised in that if, during the determination ofthe second time window, there is no detection, in the said first window, of several consecutive sequences containing words which differ from the frame locking word VT, the said determination is abandoned, and stage b) is effected, of the analysis of the contents of the first window.

5. A process according to one of Claims 1 to 4, characterised in that if, during the determination of the second time window, there is no detection in the said first window of three consecutive sequences comprising words which differ from the frame locking word VT, the said determination is abandoned and stage b) is effected, of the analysis of the content of the first window.

6. A process according to one of the preceding Claims, characterised in that the offsetting stage is only effected if the criterion for the determination of the second time window has been attained.

7. A process according to one of the preceding Claims, characterised in that, if the determination criterion of the second time window is not attained, either the word VT is detected in the first window, and stage b) of the process is effected, or it is not detected and stage a) of the process is effected.

8. A device for the correction of uncontrolled slippage of data sequences carried on digital links, each sequence being arranged in frames, these in turn being constituted of several words respectively in consecutive time intervals, one of the said frames of each sequence comprising, in a predetermined time interval, a frame locking word VT, characterised in that it comprises essentially:
A first processing circuit (5) of which the input (51) receives the data sequence signals, the said first circuit (5) comprising, on the one hand, a first window output (53) for providing a representative signal of a first time window corresponding to an interval of time in which under normal circumstances the frame locking word VT is located, and, on the other hand, a second output (54), rendered active if the said circuit (5) has not detected the frame locking word VT in the said time window;
A second processing circuit (6) of which the input (61) receives the data sequence signals, the said second circuit (6) comprising a window output (63) to issue a signal representative of a second time window corresponding to an interval of time in which the frame locking word VT should be located, the said second processing circuit (6) being rendered active at the same time as the second output (54) of the processing circuit (5);
A differential circuit (10), comprising, on the one hand, two inputs (101 and 103) respectively connected to the outputs (53 and 63) carrying the window signals which are delivered respectively by the processing circuits (5 and 6), and, on the other hand, an input (102) connected to the detection output (54) of the first processing circuit (5), the said differential circuit (10) being intended, on the one hand, to determine the value of the time differential which separates the first time window determined by the said first processing circuit (5) of the said second time window determined by the said second processing circuit (6), and, on the other, to deliver a signal which is representative of the said time differential, and;
A delay circuit (11) of variable delay, of which one input (111) is connected to a differential circuit (10), in order to receive at that point the said signal which is representative of the said time differential value, and which is intended to modify the delay or advance of the said data sequences on the digital link by a period equal to the time differential separating a first window from a second window.

9. A device according to Claim 8, characterised in that the first processing circuit (5) initiates a search for the frame locking word, in order to determine a new time window after the non-detection of the frame locking word in three consecutive frames.

10. A device according to Claims 8 or 9, characterised in that the input (113) of the delay circuit (11) is connected to the output (122) of a delay line (12) of which the period of the delay is such that the modification of the delay or advance of the delay circuit takes place approximately at the moment of non-detection by the first processing circuit of the frame locking word.
